# EUROPEAN PATENT SPECIFICATION

(11) **EP 2 829 835 B1**
(45) Date of publication and mention of the grant of the patent: **10.05.2017**
(21) Application number: 14176695.6
(22) Date of filing: 11.07.2014
(51) Int. Cl.: F28F 19/00, F28F 19/06, F28F 21/08, F28F 13/18, F28F 17/00, F28D 1/047, F28F 1/32, F28D 21/00

(54) **Heat exchanger and method and apparatus for manufacturing the same**
Wärmetauscher und Verfahren und Vorrichtung zur Herstellung davon
Échangeur de chaleur, procédé et appareil de fabrication de celui-ci

(30) Priority: 23.07.2013 KR 20130086584
(43) Date of publication of application: 28.01.2015
(73) Proprietor: LG Electronics Inc., Yeongdeungpo-gu Seoul 07336 (KR)
(72) Inventor: Song, Hyunsoo, 153-802 Seoul (KR); Lee, Jangseok, 153-802 Seoul (KR); Jhee, Sung, 153-802 Seoul (KR)
(74) Representative: Ter Meer Steinmeister & Partner

(56) References cited:
- EP-A2- 2 476 990
- WO-A1-2011/003140
- WO-A1-2011/096124
- DE-A1- 4 306 952

## Description

### BACKGROUND

The present disclosure relates to a heat exchanger and a method and apparatus for manufacturing the same.

Document WO2011/096124 A1 discloses a heat exchanger according to the preamble of claim 1 comprising a refrigerant tube through which a refrigerant flows, a heat exchange fin into which the refrigerant tube is inserted, a plurality of tube treatment parts, and a plurality of fin treatment parts disposed on a surface of the heat exchange fin.

Similar heat exchangers are disclosed by EP 2 476 990 A2, DE 43 06 952 A1, and WO2011/003140 A1.

A heat exchanger is one component constituting a refrigeration cycle. The heat exchanger may be used in electric appliances such as refrigerators or air conditioners in which the refrigeration cycle is performed.

The heat exchanger includes a refrigerant tube through which a refrigerant flows and a heat-exchange fin coupled to the refrigerant tube to allow the refrigerant to be heat-exchanged with external air. The heat-exchange fin is coupled to the refrigerant tube to increase a heat-exchange area in which the refrigerant is heat-exchanged with the air.

The heat exchanger may function as a condenser or an evaporator. When a heat exchanger functions as a condenser, a high-pressure refrigerant compressed by a compressor flows through the refrigerant tube to heat-exchange (heat dissipation) with the air and then is condensed. On the other hand, when a heat exchanger functions as an evaporator, a low-pressure refrigerant flows through the refrigerant tube to heat-exchange (heat adsorption) with the air and then is evaporated.

When a heat exchanger functions as an evaporator of the refrigerator, the heat exchanger is exposed to a low-temperature environment of a storage compartment of the refrigerator to heat-exchange with cool air of the storage compartment. That is, the refrigerant tube of the heat exchanger has a temperature less than that of the cool air of the storage compartment, and thus condensate water may be generated due to a temperature difference between the refrigerant tube (or the heat exchange fin) and the cool air.

The condensate water is frozen to form frost on a surface of the heat exchanger, i.e., surfaces of the refrigerant tube and heat-exchange fin (frost formation), and thereby disturbing heat exchanging action between the refrigerant tube and the cool air. Therefore, it is important to prevent frost from being formed on the surface of the heat exchanger so as to improve efficiency of the heat exchanger.

However, in case of the heat exchanger of related art, since the refrigerant tube or the heat-exchange fin is not separately surface-treated, frost may be formed on the refrigerant tube or the heat-exchanger, and thus it takes a lot of time to remove the frost formed on the heat exchanger.

To solve this limitation, the present applicant has filed a patent for applying a porous material onto a heat exchanger (Application No. 10-2006-0000742). However, according to the technology for applying the porous material, the formation of the frost on the heat exchanger may be prevented somewhat, but the effect is insignificant.

### SUMMARY

Embodiments provide a heat according to claim 1 that is capable of preventing frost from being formed on a surface of the heat exchanger and improving defrost performance and a method according to claim 8 for manufacturing the heat exchanger. Advantageous embodiments of the invention according to claims 1 and 8 are defined in claims 2-7 and 10-13.

The details of one or more embodiments are set forth in the accompanying drawings and the description below. Other features will be apparent from the description and drawings, and from the claims.

### BRIEF DESCRIPTION OF THE DRAWINGS

Fig. 1 is a view of a heat exchanger according to a first embodiment.
Fig. 2 is a cross-sectional view taken along line I-I' of Fig. 1.
Fig. 3 is a flowchart of a method for manufacturing the heat exchanger according to the first embodiment.
Fig. 4 is a view of an apparatus for manufacturing the heat exchanger according to the first an embodiment.
Fig. 5 is a flowchart of a surface treatment process according to the first embodiment.
Fig. 6 is a view of an apparatus for manufacturing a heat exchanger according to a second embodiment.
Fig. 7 is a view of an apparatus for manufacturing a heat exchanger according to a third embodiment.

### DETAILED DESCRIPTION OF THE EMBODIMENTS

Reference will now be made in detail to the embodiments of the present disclosure, examples of which are illustrated in the accompanying drawings. The invention may, however, be embodied in many different forms and should not be construed as being limited to the embodiments set forth herein; rather, that alternate embodiments included in other retrogressive inventions or falling within the spirit and scope of the embodiments will fully convey the concept of the embodiments to those skilled in the art.

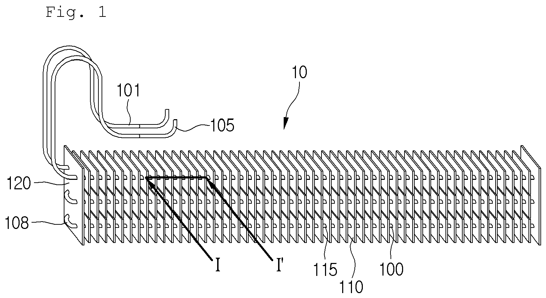

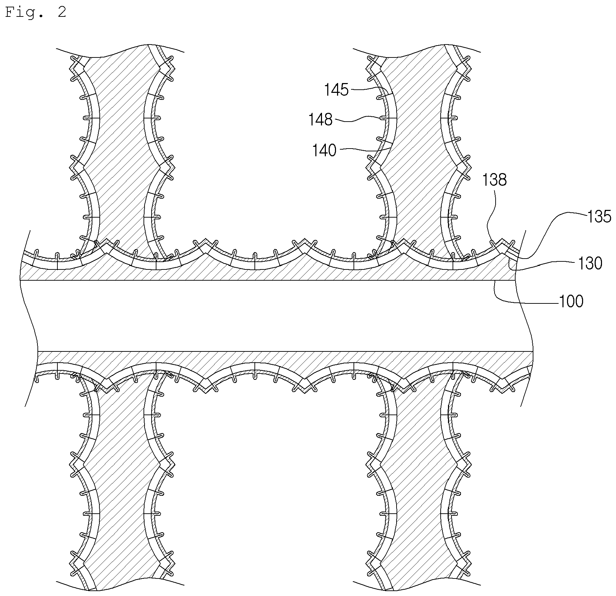

Fig. 1 is a view of a heat exchanger according to a first embodiment, and Fig. 2 is a cross-sectional view taken along line I-I' of Fig. 1.

Referring to Figs. 1 and 2, a heat exchanger 10 according to a first embodiment includes a refrigerant tube 100 through which a refrigerant flows and a heat-exchange fin 110 coupled to the refrigerant tube 100. The heat-exchange fin 110 is provided in plurality. The refrigerant tube 100 may be arranged in a plurality of rows and then be coupled to the plurality of the heat-exchange fins 110.

A through hole 115 through which the refrigerant tube 100 passes is defined in each of the heat-exchange fins 110. The refrigerant tube 100 is disposed to pass through the plurality of heat-exchange fins 110 through the through holes 115. The refrigerant flowing through the refrigerant tube 100 may be heat-exchanged with air flowing between the plurality of heat-exchange fins 110.

The refrigerant tube 100 includes a refrigerant introduction part 101 for introducing the refrigerant and a refrigerant discharge part 105 discharging the refrigerant. The refrigerant introduced through the refrigerant introduction part 101 may be heat-exchanged with the air and then be discharged from the heat exchanger 10 through the refrigerant discharge part 105.

The heat exchanger 10 includes a coupling plate 120 supporting the refrigerant tube 100 and a return band 108 coupled to the coupling plate 120 to turn a flow direction of the refrigerant of the refrigerant tube 100. For example, the return band 108 may have a U-shape of which at least one portion is curved.

The coupling plates 120 may be disposed on both sides of the refrigerant tube 100 to support the refrigerant tube 100. Also, one refrigerant tube 100 may be coupled to one end of the return band 108, and the other refrigerant tube 100 may be coupled to the other end of the return band 108.

The refrigerant tube 100 and the heat-exchange fin 110 are formed of aluminum materials, respectively. Since the refrigerant tube 100 and the heat-exchange fin 110 are formed of the aluminum materials, the heat exchanger 10 may be reduced in weight and manufacturing cost.

The refrigerant tube 100 and the heat-exchange fin 110 may be surface-treated through a predetermined processing process. The processing process may be performed at one time in a state where the refrigerant tube 100 and the heat-exchange fin 110 are coupled to each other.

Surface surface-treatment parts having the same structure may be disposed on the refrigerant tube 100 and the heat-exchange fin 110, respectively. In detail, a first tube treatment part 130 is disposed on the refrigerant tube 100. The first tube treatment part 130 includes a fine unevenness formed by performing physical or chemical treatment on the surface of the refrigerant tube 100. For example, the fine unevenness of the first tube treatment part 130 may have a structure in which a protrusion and a recess are repeatedly formed.

The fine unevenness of the first tube treatment part 130 may have a size in micrometer (µm) unit. Here, the micrometer (µm) unit may be understood as a size ranging from about 1 µm to about 1000 µm.

A first fin treatment part 140 is disposed on the heat-exchange fin 110. The first fin treatment part 140 includes a fine unevenness formed by performing physical or chemical treatment on the surface of the heat-exchange fin 110. For example, the fine unevenness of the first fin treatment part 140 may have a structure in which a protrusion and a recess are repeatedly formed. The fine unevenness of the first fin treatment part 140 may have a size in micrometer (µm) unit.

A second tube treatment part 135 may be disposed on a surface of the first treatment part 130. The second tube treatment part 135 includes a surface layer formed through an acid or base treatment process. The surface layer may have a size in nanometer (nm) unit. Here, the nanometer (nm) unit may be understood as a size ranging from about 1 nm to about 1000 nm. The surface layer of the second tube treatment part 135 may have a flake shape protruding from the surface of the first tube treatment part 130 and be called a "metal nano-layer".

A second fin treatment part 145 may be disposed on a surface of the first fin treatment part 140. The second fin treatment part 145 includes a surface layer formed through an acid or base treatment process. The surface layer of the second fin treatment part 145 may have a flake shape protruding from the surface of the first fin treatment part 140 and have a size in nanometer (nm) unit.

A third tube treatment part 138 may be disposed on the surface of the second treatment part 135. The third tube treatment part 138 includes a hydrophobic high-molecular layer formed through a coating process. The hydrophobic high-molecular layer of the third tube treatment part 38 may include a fluorinate-based compound and have a thickness in nanometer (nm), for example, a thickness of about 1 nm to about 5 nm.

A third fin treatment part 148 is disposed on the surface of the second fin treatment part 145. The third fin treatment part 148 includes a hydrophobic high-molecular layer formed through a coating process. The hydrophobic high-molecular layer of the third fin treatment part 148 may include a fluorinate-based compound and have a thickness in nanometer (nm), for example, a thickness of about 1 nm to about 5nm.

Due to the first, second and third tube treatment parts 130, 135, and 138, a plurality of layers may be laminated on the surface of the refrigerant tube 100. Also, due to the first, second, and fin tube treatment parts 140, 145, and 148, a plurality of layers may be laminated on the surface of the heat-exchange fin 110.

Hereinafter, a method for manufacturing the heat exchanger according to the current embodiment.

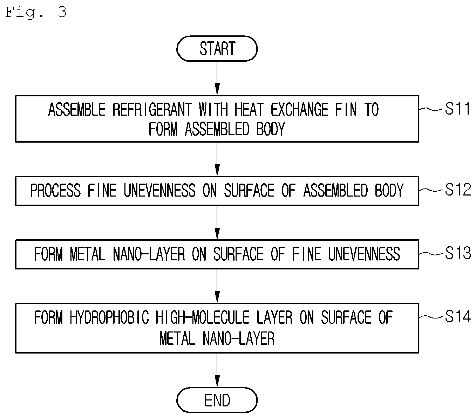

Fig. 3 is a flowchart of a method for manufacturing the heat exchanger according to the first embodiment.

Referring to Fig. 3, the refrigerant tube 100 is assembled with the heat-exchange fin 110 to constitute an assembled body. Here, in operation S11, the assembled body may be understood as an assembly in which the refrigerant tube 100 and the heat-exchange fin 100 are not yet surface-treated.

A fine unevenness may be processed on a surface of the assembled body. The fine unevenness may include a first tube treatment part 130 and a first fin treatment part 140.

The fine roughness may be formed through one of a sand blast method, a sand paper method, a shot blast method, a plasma etching method, a discharge treatment method, a laser treatment method, and an acid (base) etching method.

The sand blast method may be a method in which fine sand particles are sprayed by compressed air to physically collide with the surfaces of the refrigerant tube 100 and the heat-exchange fin 110, thereby forming a fine roughness. The sand paper method may be a method in which the surfaces of the refrigerant tube 100 and the heat-exchange fin 110 are rubbed with a sand paper.

Also, the shot blast method may be understood as a process in which fine particles of a metal or non-metal such as a shot or grit are sprayed onto the surfaces of the refrigerant tube 100 and the heat-exchange fin 110.

The plasma etching method may be understood as a dry etching process using gas plasma. Also, the acid (base) etching method may be a wet etching process using an acid solution or a base solution as an etchant. The etchant may be a fluorinate acid-diluted solution, a nitric acid-diluted solution, a phosphoric acid-diluted solution, an acetic acid-diluted solution, a hydrochloric acid-diluted, a sulfuric acid-diluted solution, or a mixture thereof

The discharge treatment method may be understood as a method in which the surfaces of the refrigerant tube 100 and the heat-exchange fin 110 are melted using high-temperature heat generated by electrical discharge and then re-coagulated. In operation S12, the laser treatment method may be understood as a method in which high power laser pulse is incident into the refrigerant tube 100 and the heat-exchange fin 110 to allow the surfaces of the refrigerant tube 100 and the heat-exchange fin 110 to wear.

After the fine unevenness is processed on the assembled body, a process for forming a metal nano-layer is performed on a surface of the fine unevenness. The metal nano-layer may include the tube treatment part 135 and the fin treatment part 145.

In detail, the process for forming the metal nano-layer includes an acid or base treatment process. In operation S13, the acid or base treatment process may include a process for dipping the heat exchanger 10 into a bath in which a predetermined acid or base solution is stored.

After the metal nano-layer is formed, a process for forming the hydrophobic high-molecular layer may be performed on the metal nano-layer. In detail, in operation S14, the process for forming the hydrophobic high-molecular layer may include a process for coating with a fluorinate-based compound and a drying process.

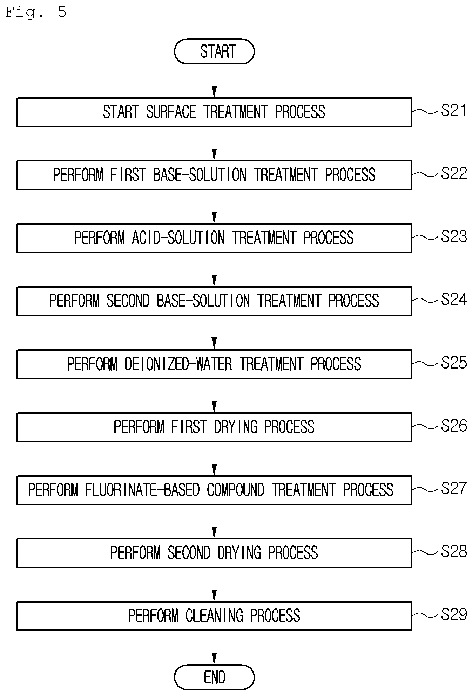

The surface treatment process will be described in detail with reference to Fig. 5.

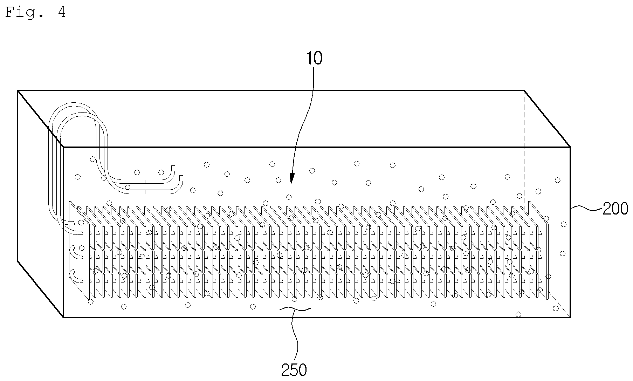

Fig. 4 is a view of an apparatus for manufacturing the heat exchanger according to the first an embodiment, and Fig. 5 is a flowchart of a surface treatment process according to the first embodiment.

Referring to Fig. 4, an apparatus for manufacturing the heat exchanger according to the first embodiment includes a bath 200 containing a predetermined compound (solution) 250 so as to dip the heat exchanger 10 in the bath 200.

Alternatively, the bath 200 may be provided in plurality, the plurality of baths 200 may store solutions 250 different from each other. The heat exchanger 10 may be sequentially dipped into the solutions 250 stored in the baths 200 according to a process order.

Here, the refrigerant tube 100 and the heat-exchange fin 110 of the heat exchanger 10 may be dipped into the solution 250 except for the refrigerant introduction part 101 and the refrigerant discharge part 105.

Referring to Fig. 5, the process for surface-treating the heat exchanger 10 according to the first embodiment will be described. The flowchart of Fig. 5 may be understood as specification of the operations S12 to S14 in Fig. 3.

In operation of S21, the refrigerant tube 100 and the heat-exchange fin 110 are assembled to form the assembled body, and then the surface treatment process starts.

When the surface treatment process starts, a first base-solution treatment process is performed. The first base-solution treatment process may include a process for dipping the heat exchanger 10 into the bath 200 containing a sodium hydroxide (NaOH) solution for a predetermined time. In operation S22, the predetermined time may be a time of about 20 seconds to about 30 seconds, and the sodium hydroxide (NaOH) solution may have a concentration of about 0.5 mol and be under room temperature.

After the first base-solution treatment process is performed, an acid-solution treatment process is performed.

The acid-solution treatment process may include a process for dipping the heat exchanger 10 into a bath 200 containing a hydrochloric acid (HCL) solution for a predetermined time. The predetermined time may be a time of about 60 seconds to about 90 seconds, and the hydrochloric acid (HCL) solution may have a concentration of about 1 mol and a temperature of about 70 to about 90°C.

In operation S23, when the acid-solution treatment process is completed, the first tube treatment part 130 is formed on the refrigerant tube 100, and the first fin treatment part 140 may be formed on the heat-exchange fin 110.

After the acid-solution treatment process is performed, a second base-solution treatment process is performed.

The second base-solution treatment process may include a process for dipping the heat exchanger 10 into a bath 200 containing a sodium hydroxide (NaOH) solution for a predetermined time.

The predetermined time may be a time of about 3 seconds to about 5 seconds, and the sodium hydroxide (NaOH) solution may have a concentration of about 0.5 mol and under room temperature. That is, in operation S24, the second base-solution treatment process takes a time less than that of the first base-solution treatment process.

After the second base-solution treatment process is performed, a deionized-water treatment process is performed. The deionized-water may be water which is substantial pure water from which mineral slats in water, e.g., positive ions such as sodium (Na), or calcium (Ca) and negative ions such as chloride ions or sulfate ions are removed.

The heat exchanger 10 treated with the base-solution and the acid-solution may be cleaned by performing the deionized-water treatment process. Thus, the deionized-water treatment process may be called a cleaning process.

In operation S25, when the deionized-water treatment process is completed, the second tube treatment part 135 is formed on the refrigerant tube 100, and the second fin treatment part 145 may be formed on the heat-exchange fin 110.

After the deionized-water treatment process is performed, a first drying process is performed. An oven may be provided as a dryer to perform the first drying process. The heat exchanger 10 is inserted into the oven, and then the first drying process may be performed for a predetermined time at a temperature of about 100°C to 120°C. Here, in operation of S26, the predetermined time may be a time of about 5 minutes to about 10 minutes.

After the first drying process is performed, the fluorinate-based compound treatment process may be performed. In operation S27, the fluorinate-based compound treatment process may include a process for dipping the heat exchanger 10 into a solution in which (heptadeca-fluoro-1,1,2,2-tetra-hydrodecyl) trichlorosilane (HDFS) is mixed with n-hexane at a ratio of about 1:1000.

After the fluorinate-based compound treatment process is performed, a second drying process is performed. An oven may be provided as a dryer to perform the second drying process. The heat exchanger 10 is inserted into the oven, and then the second drying process may be performed for a predetermined time at a temperature of about 100°C to 120°C. Here, the predetermined time may be a time of about 5 minutes to about 10 minutes.

In operation S28, when the second drying process is completed, the third tube treatment part 138 is formed on the refrigerant tube 100, and the third fin treatment part 148 may be formed on the heat-exchange fin 110.

In operation S29, after the second drying process is performed, a cleaning process is performed.

The surface treatment process may be performed to form the first, second, and third tube treatment parts 130, 135, and 138 on the refrigerant tube 100, and the first, second, and third fin treatment parts 140, 145, and 148 may be formed on the heat-exchange fin 110.

In summary, since the unevenness, the metal nano-layer, and the hydrophobic high-molecular layer are formed on the refrigerant tube 100 and the heat-exchange fin 110, the refrigerant tube 100 and the heat-exchange fin 110 may have super-water-repellant surfaces.

Since the surfaces of the refrigerant tube 100 and the heat-exchange fin 110 have super-water-repellant characteristics to bounce the water even though the heat exchanger 10 is touched by the water, a contact angle between the surface and the water may increase and a contact surface between the surface and the water may decrease. For example, the contact angle may be about 150° or more.

Thus, since the condensate water formed on the surface of the heat exchanger 10 easily flows downward, possibility in formation of frost on the surface of the heat exchanger 10 may be low, and even though the frost is formed on the surface of the heat exchanger 10, the frost may be easily removed from the surface of the heat exchanger 10.

Hereinafter, second and third embodiment will be described. Since the second and third embodiments are different from the first embodiment in the apparatus for manufacturing the heat exchanger, different points therebetween will be mainly described herein, and the same parts as those described according to the first embodiment will be denoted by the descriptions and reference numerals according to the first embodiment.

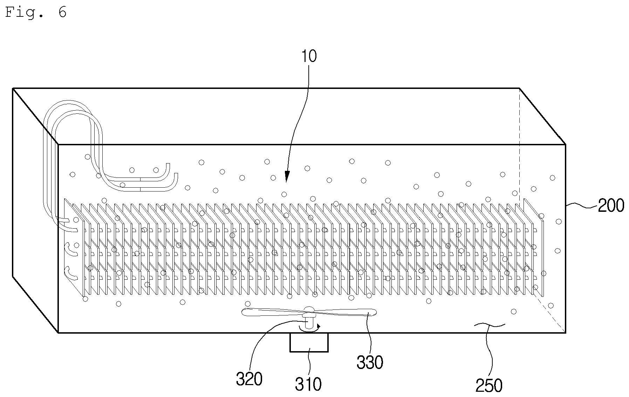

Fig. 6 is a view of an apparatus for manufacturing a heat exchanger according to a second embodiment.

Referring to Fig. 6, an apparatus for manufacturing the heat exchanger according to a second embodiment includes a bath 200 in which a solution 250 for dipping is stored and a reaction inducing device 300 coupled to the bath 200 to induce a surface treatment reaction between the heat exchanger 10 and the solution 250.

In detail, the reaction inducing device 300 includes a driving part 310 generating a driving force, a connection shaft 320 extending from the driving part 310, and a rotation part coupled to the connection shaft 320.

For example, the driving part 310 may be a motor, and the connection shaft 320 may be a motor shaft. When the motor is driven, the motor shaft may be rotated in a predetermined direction. Also, the rotation part 330 may include a blade that is rotated together with the motor shaft in a predetermine direction.

When the rotation part 330 is rotated, a rotation force is applied to the solution 250, and thus the solution 250 may move. According to the movement of the solution 250, the heat exchanger 10 and the solution 250 may quickly react with each other (reaction acceleration phenomenon). Thus, a process time for surface-treating the heat exchanger 10 may be reduced.

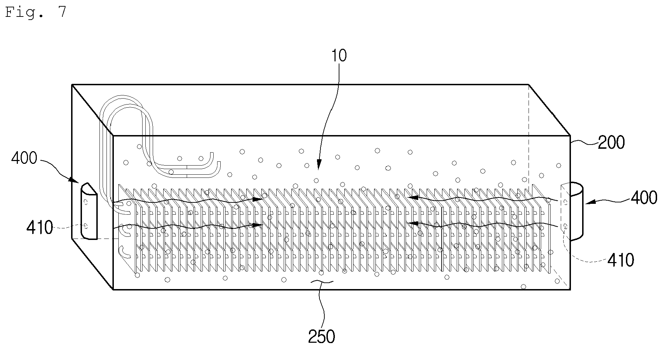

Fig. 7 is a view of an apparatus for manufacturing a heat exchanger according to a third embodiment.

Referring to Fig. 7, an apparatus for manufacturing the heat exchanger according to a third embodiment includes a bath 200 in which a solution 250 is stored and a reaction inducing device 400 disposed at least one surface of the bath 200. For example, the reaction inducing device 400 may include "ultrasonic wave generators" for generating ultrasonic waves. The ultrasonic wave generators may be provided on one surface and the other surface of the bath 200. Here, the one surface and the other surface may be understood as surfaces facing each other.

In detail, the reaction induction device 400 includes a vibrator 410 generating vibration when a predetermined input signal is applied to output ultrasonic waves. The vibrator 410 may be coupled to the bath 200 so that the vibrator 410 is exposed to the solution 250 in the bath 200.

The ultrasonic waves generated through the vibrator 410 may be transmitted into the solution 250. The ultrasonic waves may have a function for accelerating oxidation or reduction reaction.

That is, when the reaction inducing device 400 is operated to transmit the ultrasonic waves toward the solution 250, the heat exchanger 10 and the solution 250 may quickly react with each other (reaction acceleration phenomenon). Thus, a process time for surface-treating the heat exchanger 10 may be reduced.

According to the proposed embodiments, the predetermined structures are applied onto the surface of the heat exchanger, i.e., the surfaces of the refrigerant tube and the refrigerant fin, to allow the surface of the heat exchanger to have the super-water-repellant characteristic, and thus the freezing on surface of the heat exchanger may be relatively reduced, and also the frost formed on the surface of the heat exchanger may be easily removed.

Also, since the completely assembled heat exchanger is dipped into the bath and then is surface-treated, the surface treatment process on the refrigerant tube and the refrigerant fin may be simply performed at once.

Also, since the reaction inducing device is disposed in the bath in which the solution for surface-treating is contained, the heat exchanger may quickly react with chemical materials.

Also, since each of the refrigerant tube and the heat exchange fin which constitute the heat exchanger is formed of the aluminum material, the heat exchanger may be reduced in weight and manufacturing cost.

Although embodiments have been described with reference to a number of illustrative embodiments thereof, it should be understood that numerous other modifications and embodiments can be devised by those skilled in the art that will fall within the scope of the principles of this disclosure as defined in the appended claims.

## Claims

1. A heat exchanger (10) comprising:
a refrigerant tube (100) through which a refrigerant flows;
a heat-exchange fin (110) into which the refrigerant tube (100) is inserted;
a plurality of tube treatment parts (130, 135, 138) disposed on a surface of the refrigerant tube (100) and formed by processing the surface of the refrigerant tube (100);
and a plurality of fin treatment parts (140, 145, 148) disposed on a surface of the heat-exchange fin (110),
**characterised in that** the plurality of fin treatment parts comprises:
a first fin treatment part (140) disposed on a surface of the heat-exchange fin (110), the first fin treatment part (140) being formed by processing a surface of the heat exchange fin (110) and comprising a fine unevenness having a size in micrometer (µm) unit;
a second fin treatment part (145) disposed on a surface of the first fin treatment part (140), the second fin treatment part (145) being formed by processing a surface of the first fin treatment part (140) and comprising a metal layer having a size formed in a nanometer (nm) unit; and
a third fin treatment part (148), disposed on a surface of the second fin treatment part (145), the third fin treatment part (148) being formed by processing the surface of the second fin treatment part (145) and comprising a hydrophobic high-molecular layer.

2. The heat exchanger according to claim 1, wherein the plurality of tube treatment parts comprise:
a first tube treatment part (130) formed by processing the surface of the refrigerant tube (100), the first tube treatment part (130) comprising a fine unevenness formed in a micrometer (µm) unit; and
a second tube treatment part (135) formed by processing the surface of the first tube treatment part (130), the second tube treatment part (135) comprising a metal layer formed in a nanometer (nm) unit.

3. The heat exchanger according to claim 2, wherein the first tube treatment part (130) is formed through one of a sand blast method, a sand paper method, a shot blast method, a plasma etching method, a discharge treatment method, a laser treatment method, and an acid (base) etching method.

4. The heat exchanger according to claim 2 or 3, wherein the metal layer of the second tube treatment part (135) is formed by an acid or base treatment process.

5. The heat exchanger according to any one of the claims 2 to 4, wherein the plurality of tube treatment parts comprise a third tube treatment part (138) formed by processing a surface of the second tube treatment part (135), the third tube treatment part (138) comprising a hydrophobic high-molecular layer.

6. The heat exchanger according to claim 5, wherein the hydrophobic high-molecular layer of the third tube treatment part (138) is coated with a fluorinate-based compound.

7. The heat exchanger according to any one of the preceding claims 1 to 6, wherein each of the refrigerant tube (100) and the heat-exchange fin (110) is formed of an aluminum material.

8. A method for manufacturing a heat exchanger (10), the method comprising:
assembling a refrigerant tube (100) with a heat-exchange fin (110) to form an assembled body,
**characterized in that** the method further comprises:
processing a fine unevenness on a surface of the assembled body to form a first fin treatment part (140);
forming a metal nano-layer on a surface of the first fin treatment part to form a second fin treatment part (145); and
forming a hydrophobic high-molecular layer on a surface of the metal nano-layer to form a third fin treatment part (148),
wherein the fine unevenness has a size formed in a micrometer (µm) unit and the metal layer has a size formed in a nanometer (nm) unit.

9. The method according to claim 8, wherein the processing of the fine unevenness on the surface of the assembled body is performed by using one of a sand blast method, a sand paper method, a shot blast method, a plasma etching method, a discharge treatment method, a laser treatment method, and an acid or base etching method.

10. The method according to claim 9, wherein the processing of the fine unevenness on the surface of the assembled body comprises:
dipping the assembled body into a first base solution; and
dipping the assembled body into an acid solution.

11. The method according to any one of the claims 8 to 10, wherein the forming of the metal nano-layer on the surface of the fine unevenness comprises:
dipping the assembled body into a second base solution; and
dipping the assembled body into deionized-water.

12. The method according to claim11, wherein a time taken for dipping the assembled body into the second base solution is longer than that taken for dipping the assembled body into the first base solution.

13. The method according to any one of the claims 8 to 12, the forming of the hydrophobic high-molecular layer on the surface of the metal nano-layer comprises:
performing a first drying process on the assembled body;
treating the assembled body by using a fluorinate-based compound; and performing a second drying process on the assembled body.

## Patentansprüche

1. Wärmetauscher (10), der Folgendes umfasst:
ein Kühlmittelrohr (100), durch das ein Kühlmittel strömt;
eine Wärmetauscherlamelle (110), in die das Kühlmittelrohr (100) eingesetzt ist;
mehrere behandelte Rohrbauteile (130, 135, 138), die auf einer Oberfläche des Kühlmittelrohrs (100) angeordnet sind und durch Bearbeiten der Oberfläche des Kühlmittelrohrs (100) gebildet sind; und
mehrere behandelte Lamellenbauteile (140, 145, 148), die auf einer Oberfläche der Wärmetauscherlamelle (110) angeordnet sind,
**dadurch gekennzeichnet, dass** die mehreren behandelten Lamellenbauteile Folgendes umfassen:
ein erstes behandeltes Lamellenbauteil (140), das auf einer Oberfläche der Wärmetauscherlamelle (110) angeordnet ist, wobei das erste behandelte Lamellenbauteil (140) gebildet wird, indem eine Oberfläche der Wärmetauscherlamelle (110) bearbeitet wird, und das eine feine Rauigkeit aufweist, die eine Größe in der Größenordnung von Mikrometern (µm) hat;
ein zweites behandeltes Lamellenbauteil (145), das auf einer Oberfläche des ersten behandelten Lamellenbauteils (140) angeordnet ist, wobei das zweite behandelte Lamellenbauteil (145) gebildet wird, indem eine Oberfläche des ersten behandelten Lamellenbauteils (140) bearbeitet wird, und das eine Metallschicht aufweist, die eine Größe hat, die in der Größenordnung von Nanometern (nm) liegt; und
ein drittes behandeltes Lamellenbauteil (148), das auf einer Oberfläche des zweiten behandelten Lamellenbauteils (145) angeordnet ist, wobei das dritte behandelte Lamellenbauteil (148) gebildet wird, indem die Oberfläche des zweiten behandelten Lamellenbauteils (145) bearbeitet wird, und das eine hydrophobe hochmolekulare Schicht aufweist.

2. Wärmetauscher nach Anspruch 1, wobei die mehreren behandelten Rohrbauteile Folgendes umfassen:
ein erstes behandeltes Rohrbauteil (130), das durch Bearbeiten der Oberfläche des Kühlmittelrohrs (100) gebildet wird, wobei das erste behandelte Rohrbauteil (130) eine feine Rauigkeit aufweist, die in der Größenordnung von Mikrometern (µm) liegt; und
ein zweites behandeltes Rohrbauteil (135), das durch Bearbeiten der Oberfläche des ersten behandelten Rohrbauteils (130) gebildet wird, wobei das zweite behandelte Rohrbauteil (135) eine Metallschicht aufweist, die in der Größenordnung von Nanometern (nm) liegt.

3. Wärmetauscher nach Anspruch 2, wobei das erste behandelte Rohrbauteil (130) durch ein Sandstrahlverfahren, ein Sandpapierverfahren, eine Kugelstrahlverfahren, ein Plasmaätzverfahren, ein Entladungsbehandlungsverfahren, ein Laserbehandlungsverfahren, ein Säure- oder ein Basenätzverfahren gebildet wird.

4. Wärmetauscher nach Anspruch 2 oder 3, wobei die Metallschicht des zweiten behandelten Rohrbauteils (135) durch einen Säure- oder Basenbehandlungsprozess gebildet wird.

5. Wärmetauscher nach einem der Ansprüche 2 bis 4, wobei die mehreren behandelten Rohrbauteile ein drittes behandeltes Rohrbauteil (138) umfassen, das durch Bearbeiten einer Oberfläche des zweiten behandelten Rohrbauteils (135) gebildet wird, wobei das dritte behandelte Rohrbauteil (138) eine hydrophobe hochmolekulare Schicht aufweist.

6. Wärmetauscher nach Anspruch 5, wobei die hydrophobe hochmolekulare Schicht des dritten behandelten Rohrbauteils (138) mit einer Mischung auf Fluorbasis beschichtet ist.

7. Wärmetauscher nach einem der vorhergehenden Ansprüche 1 bis 6, wobei das Kühlmittelrohr (100) und die Wärmetauscherlamelle (110) aus Aluminium gebildet sind.

8. Verfahren zum Herstellen eines Wärmetauschers (10), wobei das Verfahren die folgenden Schritte umfasst:
Zusammenbauen eines Kühlmittelrohrs (100) mit einer Wärmetauscherlamelle (110), um einen zusammengebauten Körper zu bilden,
**dadurch gekennzeichnet, dass** das Verfahren ferner die folgenden Schritte umfasst:
Bearbeiten einer feinen Rauigkeit auf einer Oberfläche des zusammengebauten Körpers, um ein erstes behandeltes Lamellenbauteil (140) zu bilden;
Bilden einer metallischen Nanoschicht auf einer Oberfläche des ersten behandelten Lamellenbauteils, um ein zweites behandeltes Lamellenbauteil (145) zu bilden; und
Bilden einer hydrophoben hochmolekularen Schicht auf einer Oberfläche der metallischen Nanoschicht, um ein drittes behandeltes Lamellenbauteil (148) zu bilden,
wobei die feine Rauigkeit eine Größe hat, die in der Größenordnung von Mikrometern (µm) liegt, und wobei die Metallschicht eine Größe hat, die in der Größenordnung von Nanometern (nm) liegt.

9. Verfahren nach Anspruch 8, wobei das Bearbeiten der feinen Rauigkeit auf der Oberfläche des zusammengebauten Körpers durchgeführt wird, indem ein Sandstrahlverfahren, ein Sandpapierverfahren, eine Kugelstrahlverfahren, ein Plasmaätzverfahren, ein Entladungsbehandlungsverfahren, ein Laserbehandlungsverfahren, ein Säure- oder ein Basenätzverfahren verwendet wird.

10. Verfahren nach Anspruch 9, wobei das Bearbeiten der feinen Rauigkeit auf der Oberfläche des zusammengebauten Körpers die folgenden Schritte umfasst:
Eintauchen des zusammengebauten Körpers in eine erste Basenlösung; und
Eintauchen des zusammengebauten Körpers in eine Säurelösung.

11. Verfahren nach einem der Ansprüche 8 bis 10, wobei das Bilden der metallischen Nanoschicht auf der Oberfläche der feinen Rauigkeit die folgenden Schritte umfasst:
Eintauchen des zusammengebauten Körpers in eine zweite Basenlösung; und
Eintauchen des zusammengebauten Körpers in entionisiertes Wasser.

12. Verfahren nach Anspruch 11, wobei eine Zeit, die zum Eintauchen des zusammengesetzten Körpers in die zweite Basenlösung benötigt wird, länger als die Zeit ist, die zum Eintauchen des zusammengesetzten Körpers in die erste Basenlösung benötigt wird.

13. Verfahren nach einem der Ansprüche 8 bis 12, wobei das Bilden der hydrophoben hochmolekularen Schicht auf der Oberfläche der metallischen Nanoschicht die folgenden Schritte umfasst:
Durchführen eines ersten Trocknungsprozesses bei dem zusammengebauten Körper;
Behandeln des zusammengebauten Körpers durch Verwenden einer Mischung auf Fluorbasis; und
Durchführen eines zweiten Trocknungsprozesses an dem zusammengebauten Körper.

## Revendications

1. Echangeur thermique (10) comprenant :
un tube de fluide de refroidissement (100) à travers lequel un fluide de refroidissement circule ;
une ailette d'échangeur thermique (110) dans lequel le tube de fluide de refroidissement (100) est inséré ;
une pluralité de pièces de traitement de tube (130,135,138) disposées sur une surface du tube de fluide de refroidissement (100) et formée en traitant la surface du tube de fluide de refroidissement (100) ;
et une pluralité de pièces de traitement d'ailette (140,145,148) disposées sur une surface de l'ailette d'échangeur thermique (110),
**caractérisé en ce que** la pluralité de pièces de traitement d'ailette comprend :
une première pièce de traitement d'ailette (140) disposée sur une surface de l'ailette d'échangeur thermique (110), la première pièce de traitement d'ailette (140) étant formée en traitant une surface de l'ailette d'échangeur thermique (110) et comprenant une première irrégularité fine ayant une taille en unités de micromètres (µm) ;
une seconde pièce de traitement d'ailette (145) disposée sur une surface de la première pièce de traitement d'ailette (140), la seconde pièce de traitement d'ailette (145) étant formée en traitant une surface de la première pièce de traitement d'ailette (140) et comprenant une couche de métal ayant une taille formée en unité de nanomètre (nm) ; et
une troisième pièce de traitement d'ailette (148), disposée sur une surface de la seconde pièce de traitement d'ailette (145), la troisième pièce de traitement d'ailette (148) étant formée en traitant la surface de la seconde pièce de traitement d'ailette (145) et comprenant une couche hydrophobe à haut poids moléculaire.

2. Echangeur thermique selon la revendication 1, dans lequel la pluralité de pièces de traitement de tube comprend :
une première pièce de traitement de tube (130) formée en traitant la surface du tube de fluide de refroidissement (100), la première pièce de tube de fluide de refroidissement (130) comprenant une irrégularité fine formée en unité de micromètre (µm) ; et
une seconde pièce de traitement de tube (135) formée en traitant la surface de la première de traitement de tube (130), la seconde pièce de traitement de tube (135) comprenant une couche de métal formée en unité de nanomètre (nm).

3. Echangeur thermique selon la revendication 2, dans lequel la première pièce de traitement de tube (130) est formé grâce à un d'un procédé de sablage, un procédé de papier de verre, un procédé de grenaillage, un procédé de gravure plasma, un procédé de traitement par décharge, un procédé de traitement laser et un procédé d'attaque chimique acide (base).

4. Echangeur thermique selon la revendication 2 ou 3, dans lequel la couche de métal de la seconde pièce de traitement de tube (135) est formée par un processus de traitement acide ou base.

5. Echangeur thermique selon une quelconque des revendications 2 à 4, dans lequel la pluralité de pièces de traitement de tube comprend une troisième pièce de traitement de tube (138) formée en traitant une surface de la seconde pièce de traitement de tube (135), la troisième pièce de traitement de tube (138) comprenant une couche hydrophobe à haut poids moléculaire.

6. Echangeur thermique selon la revendication 5, dans lequel la couche hydrophobe à haut poids moléculaire (138) est revêtu d'un composé à base fluorée.

7. Echangeur thermique selon une quelconque des revendications précédentes 1 à 6, dans lequel chacun du tube de fluide de refroidissement (100) et l'ailette d'échangeur thermique (110) est formé d'un matériau aluminium.

8. Procédé de fabrication d'un échangeur thermique (10), le procédé comprenant de :
assembler un tube de fluide réfrigérant (100) avec une ailette d'échangeur thermique (110) pour former un corps assemblé,
**caractérisé en ce que** le procédé comprend en outre de :
traiter une irrégularité fine sur une surface du corps assemblé pour former une première pièce de traitement d'ailette (140) ;
former une nano-couche de métal sur une surface de la première pièce de traitement d'ailette pour former une seconde pièce de traitement d'ailette (145) ; et
former une couche hydrophobe à haut poids moléculaire sur une surface de la nano-couche de métal pour former une troisième pièce de traitement d'ailette (148),
dans lequel la première irrégularité a une taille formée en unité de micromètre (µm) et la couche de métal a une taille formée en unité de nanomètre (nm).

9. Procédé selon la revendication 8, dans lequel le traitement de l'irrégularité fine sur la surface du corps assemblé est effectuée en utilisant un d'un procédé de sablage, un procédé de papier de verre, un procédé de grenaillage, un procédé de gravure plasma, un procédé de traitement par décharge, un procédé de traitement laser et un procédé d'attaque chimique acide ou base.

10. Procédé selon la revendication 9 dans lequel le traitement de l'irrégularité fine sur la surface du corps assemblé comprend de :
tremper le corps assemblé dans une première solution de base ; et
tremper le corps assemblé dans une solution acide.

11. Procédé selon une quelconque des revendications 8 à 10, dans lequel la formation de la nano-couche de métal sur la surface de la première irrégularité comprend de :
tremper le corps assemblé dans une seconde solution de base ; et
tremper le corps assemblé dans de l'eau dé-ionisée.

12. Procédé selon la revendication 11, dans lequel un temps pris pour tremper le corps assemblé dans la seconde solution de base est plus long que celui pris pour tremper le corps assemblé dans la première solution de base.

13. Procédé selon une quelconque des revendications 8 à 12, la formation de la couche hydrophobe à haut poids moléculaire sur la surface de la nano-couche de métal comprend de :
effectuer un premier processus de séchage sur le corps assemblé ;
traiter le corps assemblé en utilisant un composé à base fluorée ; et effectuer un second processus de séchage sur le corps assemblé.
